# EUROPEAN PATENT APPLICATION

(11) **EP 2 711 402 A1**
(43) Date of publication of application: **26.03.2014**
(21) Application number: 13754921.8
(22) Date of filing: 26.02.2013
(51) Int. Cl.: C09J 133/00, C09J 7/02, C09J 11/06

(54) **PRESSURE-SENSITIVE ADHESIVE COMPOSITION AND PRESSURE-SENSTIVE ADHESIVE SHEET**

(30) Priority: 01.03.2012 JP 2012045884
(71) Applicant: Nitto Denko Corporation, Ibaraki-shi, Osaka 567-8680 (JP)
(72) Inventor: KOSO, Masatsugu, Ibaraki-shi Osaka 567-8680 (JP)
(74) Representative: Schwabe - Sandmair - Marx
(86) International application number: PCT/JP2013/054916
(87) International publication number: WO 2013/129382

(57) **Abstract**

A pressure-sensitive adhesive composition is prepared in a non-aqueous state from an acrylic polymer having an active hydrogen-containing group and a metal sulfate having a substituted group.

## Description

### Technical Field

The present invention relates to a pressure-sensitive adhesive composition and a pressure-sensitive adhesive sheet, to be specific, to a pressure-sensitive adhesive composition and a pressure-sensitive adhesive sheet including a pressure-sensitive adhesive layer formed from the pressure-sensitive adhesive composition.

### Background Art

A pressure-sensitive adhesive sheet, conventionally, has been widely used in various industrial fields and such a pressure-sensitive adhesive sheet includes a pressure-sensitive adhesive layer formed from a pressure-sensitive adhesive composition.

As the pressure-sensitive adhesive composition, for example, an aqueous dispersion type acrylic pressure-sensitive adhesive composition containing an acrylic emulsion-based polymer (A) obtained by polymerizing an alkyl (meth)acrylate and a carboxyl group-containing unsaturated monomer as material monomers, a polyfunctional hydrazide cross-linking agent (B), and a polyfunctional epoxy cross-linking agent (C) has been proposed (ref: for example, the following Patent Document 1).

In the following Patent Document 1, the acrylic emulsion-based polymer (A), the polyfunctional hydrazide cross-linking agent (B), and the polyfunctional epoxy cross-linking agent (C) are blended to prepare the pressure-sensitive adhesive composition and the pressure-sensitive adhesive composition immediately after the preparation is applied to a substrate to be heated, so that the pressure-sensitive adhesive sheet including the pressure-sensitive adhesive layer is produced.

### Prior Art Document

### Patent Document

Patent Document 1: Japanese Unexamined Patent Publication No. 2010-163526

### Summary of the Invention

### Problems to be solved by the Invention

There is, however, a demand for ensuring a sufficient time, that is, ensuring a long pot life after blending of a material of the pressure-sensitive adhesive composition till application of the prepared pressure-sensitive adhesive composition in accordance with its use and purpose.

In the above-described Patent Document 1, however, after the blending of the material, in the prepared aqueous dispersion type acrylic pressure-sensitive adhesive composition, a reaction is quickly progressed without heating and the viscosity thereof is increased. That is, the pot life thereof is short, so that there may be a case where the above-described demand is not capable of being satisfied.

On the other hand, it has been tentatively proposed that an aqueous dispersion type acrylic pressure-sensitive adhesive composition is prepared from the acrylic emulsion-based polymer (A) only, excluding the polyfunctional hydrazide cross-linking agent (B) and the polyfunctional epoxy cross-linking agent (C), in the materials in the above-described Patent Document 1. In such a case, there is a disadvantage that in the aqueous dispersion type acrylic pressure-sensitive adhesive composition after application, a reaction is hardly progressed when it is heated, so that a pressure-sensitive adhesive layer is not capable of being formed.

It is an object of the present invention to provide a pressure-sensitive adhesive composition in which a reaction is quickly progressed when it is heated, while a long pot life is ensured, and a pressure-sensitive adhesive sheet including a pressure-sensitive adhesive layer that is formed from the pressure-sensitive adhesive composition.

### Solution to the Problems

In order to achieve the above-described object, a pressure-sensitive adhesive composition of the present invention is prepared in a non-aqueous state from an acrylic polymer having an active hydrogen-containing group and a metal sulfate having a substituted group.

In the pressure-sensitive adhesive composition of the present invention, it is preferable that the following gel fraction (1) is 30 mass % or less.

Gel fraction (1): a percentage of a dry mass of an ethyl acetate-insoluble portion with respect to a mass of a pressure-sensitive adhesive layer before immersion at the time of immersing the pressure-sensitive adhesive layer, which is obtained by being applied onto a substrate to be retained in shape, is laminated on the substrate, and has a thickness of 10 µm, in an ethyl acetate at 23°C for seven days.

In the pressure-sensitive adhesive composition of the present invention, it is preferable that the following gel fraction (2) is 50 mass % or more.

Gel fraction (2): a percentage of a dry mass of an ethyl acetate-insoluble portion with respect to a mass of a pressure-sensitive adhesive layer before immersion at the time of immersing the pressure-sensitive adhesive layer, which is obtained by heating at 80°C for seven days after being applied onto a substrate to be retained in shape so as to have a thickness of 10 µm and is laminated on the substrate, in an ethyl acetate at 23°C for seven days.

In the pressure-sensitive adhesive composition of the present invention, it is preferable that the substituted group is a polyoxyethylene alkyl ether group.

In the pressure-sensitive adhesive composition of the present invention, it is preferable that the metal sulfate is a sodium salt.

A pressure-sensitive adhesive sheet of the present invention includes a pressure-sensitive adhesive layer formed from the above-described pressure-sensitive adhesive composition, wherein the pressure-sensitive adhesive composition is prepared in a non-aqueous state from an acrylic polymer having an active hydrogen-containing group and a metal sulfate having a substituted group.

### Effect of the Invention

The pressure-sensitive adhesive composition of the present invention is prepared in a non-aqueous state from the acrylic polymer having an active hydrogen-containing group and the metal sulfate having a substituted group, so that the reaction thereof is quickly progressed when it is heated, while the reaction thereof is hardly progressed at a normal temperature.

Thus, the pressure-sensitive adhesive composition of the present invention has a long pot life and is capable of quickly progressing its reaction when it is heated.

In the pressure-sensitive adhesive sheet of the present invention, the pressure-sensitive adhesive layer formed from the pressure-sensitive adhesive composition in which the reaction is progressed by heating exhibits an excellent cohesive force.

### Brief Description of the Drawings

[FIG. 1] FIG. 1 shows a sectional view of one embodiment of a pressure-sensitive adhesive sheet of the present invention.

### Embodiment of the Invention

A pressure-sensitive adhesive composition of the present invention is prepared from an acrylic polymer and a metal sulfate in a non-aqueous state.

The acrylic polymer has an active hydrogen-containing group. To be specific, the acrylic polymer is obtained by polymerizing a monomer component containing an alkyl (meth)acrylate and an active hydrogen monomer having an active hydrogen-containing group.

The alkyl (meth)acrylate is an alkyl acrylate and/or an alkyl methacrylate. To be specific, an example thereof includes an alkyl (meth)acrylate containing a straight chain or branched chain alkyl portion having 4 to 20 carbon atoms such as butyl (meth)acrylate, isobutyl (meth)acrylate, sec-butyl (meth)acrylate, t-butyl (meth)acrylate, pentyl (meth)acrylate, neopentyl (meth)acrylate, isopentyl (meth)acrylate, hexyl (meth)acrylate, heptyl (meth)acrylate, octyl (meth)acrylate, 2-ethylhexyl (meth)acrylate, isooctyl (meth)acrylate, nonyl (meth)acrylate, isononyl (meth)acrylate, decyl (meth)acrylate, isodecyl (meth)acrylate, undecyl (meth)acrylate, dodecyl (meth)acrylate, tridecyl (meth)acrylate, tetradecyl (meth)acrylate, pentadecyl (meth)acrylate, hexadecyl (meth)acrylate, heptadecyl (meth)acrylate, octadecyl (meth)acrylate, nonadecyl (meth)acrylate, and eicosyl (meth)acrylate.

These alkyl (meth)acrylates can be used alone or in combination of two or more.

As the alkyl (meth)acrylate, preferably, an alkyl (meth)acrylate containing an alkyl portion having 4 to 12 carbon atoms is used, or more preferably, butyl (meth)acrylate and 2-ethylhexyl (meth)acrylate are used.

The mixing ratio of the alkyl (meth)acrylate with respect to 100 parts by mass of the monomer component is, for example, 70 to 99.5 parts by mass, preferably 80 to 99 parts by mass, or more preferably 85 to 98 parts by mass.

The active hydrogen monomer is blended into the monomer component so as to introduce an active hydrogen-containing group into the acrylic polymer. The active hydrogen monomer is, for example, a vinyl monomer having an active hydrogen-containing group such as a carboxyl group, a hydroxyl group, or an amino group. To be specific, examples thereof include a carboxyl group-containing monomer, a hydroxyl group-containing monomer, and an amino group-containing monomer.

Examples of the carboxyl group-containing monomer include an unsaturated carboxylic acid such as (meth)acrylic acid (methacrylic acid and/or acrylic acid), fumaric acid, maleic acid, itaconic acid, crotonic acid, cinnamic acid, trimellitic acid, and pyromellitic acid; unsaturated dicarboxylic acid monoester such as monomethyl itaconate, monobutyl itaconate, and 2-acryloyloxyethyl phthalate; unsaturated tricarboxylic acid monoester such as 2-(meth)acryloyloxyethyl trimellitic acid, 2-(meth)acryloyloxyethyl pyromellitic acid; and carboxy alkyl (meth)acrylate such as carboxy ethyl (meth)acrylate and carboxy pentyl (meth)acrylate.

These carboxyl group-containing monomers can be used alone or in combination of two or more.

An example of the hydroxyl group-containing monomer includes a hydroxy alkyl (meth)acrylate such as 2-hydroxyethyl (meth)acrylate, 2-hydroxypropyl (meth)acrylate, 3-hydroxypropyl (meth)acrylate, 2-hydroxybutyl (meth)acrylate, 4-hydroxybutyl (meth)acrylate, 6-hydroxyhexyl (meth)acrylate, 8-hydroxyoctyl (meth)acrylate, 10-hydroxydecyl (meth)acrylate, 12-hydroxylauryl (meth)acrylate, and (4-hydroxymethyl) cyclohexyl (meth)acrylate.

An example of the hydroxyl group-containing monomer also includes a hydroxy alkyl (meth)acrylamide such as N-methylol (meth)acrylamide, N-(2-hydroxyethyl) (meth)acrylamide, N-(2-hydroxypropyl) (meth)acrylamide, N-(1-hydroxypropyl) (meth)acrylamide, N-(3-hydroxypropyl) (meth)acrylamide, N-(2-hydroxybutyl) (meth)acrylamide, N-(3-hydroxybutyl) (meth)acrylamide, N-(4-hydroxybutyl) (meth)acrylamide, and N-methyl-N-2-hydroxyethyl (meth)acrylamide.

These hydroxyl group-containing monomers can be used alone or in combination of two or more.

Examples of the amino group-containing monomer include aminoethyl (meth)acrylate, N,N-dimethylaminoethyl (meth)acrylate, and N,N-dimethylaminopropyl (meth)acrylate.

These amino group-containing monomers can be used alone or in combination of two or more.

As the active hydrogen monomer, preferably, a carboxyl group-containing monomer and a hydroxyl group-containing monomer are used.

As the carboxyl group-containing monomer, preferably, an unsaturated carboxylic acid is used, or more preferably, (meth)acrylic acid is used.

As the hydroxyl group-containing monomer, preferably, a hydroxy alkyl (meth)acrylate is used, or more preferably, 2-hydroxyethyl (meth)acrylate is used.

These active hydrogen monomers can be used alone or in combination of two or more.

The mixing ratio of the active hydrogen monomer with respect to 100 parts by mass of the monomer component is, for example, 0.5 to 30 parts by mass, preferably 1 to 20 parts by mass, or more preferably 2 to 15 parts by mass.

When the mixing ratio of the active hydrogen monomer is below the above-described range, there may be a case where the formation of cross-linking is sufficient, so that the cohesive force and the anchoring properties of the pressure-sensitive adhesive composition are reduced and thus, an adhesive residue is generated at the time of peeling the pressure-sensitive adhesive sheet including the pressure-sensitive adhesive layer that is formed from the pressure-sensitive adhesive composition.

On the other hand, when the mixing proportion of the active hydrogen monomer is above the above-described range, there may be a case where the cohesive force of the acrylic polymer is increased, so that the fluidity of the pressure-sensitive adhesive composition is reduced and thus, the pressure-sensitive adhesive force and the re-peeling properties are reduced. Also, there may be a case where the adjustment of the degree of cross-linking (for example, a gel fraction) becomes difficult or a case where gelation occurs during the polymerization of the monomer component due to interaction of the active hydrogen-containing groups with themselves, leading to an increase in viscosity or occurrence of an aggregate.

The above-described alkyl (meth)acrylate and a copolymerizable monomer that is copolymerizable with the active hydrogen monomer can be contained in the monomer component.

Examples of the copolymerizable monomer include an alkyl (meth)acrylate containing an alkyl portion having 1 to 3 carbon atoms such as methyl (meth)acrylate, ethyl (meth)acrylate, propyl (meth)acrylate, and isopropyl (meth)acrylate; a cyclic (meth)acrylamide such as N-(meth)acryloylmorpholine and N-acryloylpyrroridine; an N-alkyl (meth)acrylamide such as (meth)acrylamide and N-substituted (meth)acrylamide (for example, N-ethyl (meth)acrylamide and N-n-butyl (meth)acrylamide); an acyclic (meth)acrylamide such as N,N-dialkyl (meth)alkylamide (for example, N,N-dimethyl (meth)acrylamide, N,N-diethyl (meth)acrylamide, N,N-dipropyl (meth)acrylamide, N,N-diisopropyl (meth)acrylamide, N,N-di(n-butyl) (meth)acrylamide, N,N-di(t-butyl) (meth)acrylamide, and N,N-dimethyl (meth)acrylamide); an N-vinyl cyclic amide such as N-vinyl-2-pyrrolidone, N-vinyl-2-piperidone, N-vinyl-3-morpholinone, N-vinyl-2-caprolactam, N-vinyl-1,3-oxazine-2-one, and N-vinyl-3,5-morpholinedione; a maleimide-based monomer such as N-cyclohexylmaleimide and N-phenylmaleimide; an itaconimide-based monomer such as N-methylitaconimide, N-ethylitaconimide, N-propylitaconimide, N-butylitaconimide, N-2-ethylhexylitaconimide, N-laurylitaconimide, and N-cyclohexylitaconimide; an epoxy group-containing monomer such as glycidyl (meth)acrylate and allyl glycidyl ether; an alkoxy group-containing monomer such as methoxyethyl (meth)acrylate, methoxypropyl (meth)acrylate, methoxyethylene glycol (meth)acrylate, and methoxypolypropylene glycol (meth)acrylate; a cyano group-containing monomer such as (meth)acrylonitrile; a styrene-based monomer such as styrene and α-methylstyrene; an α-olefin such as ethylene, propylene, isoprene, butadiene, and isobutylene; an isocyanate group-containing monomer such as 2-(meth)acryloyloxyethyl isocyanate; a vinyl ester-based monomer such as vinyl acetate and vinyl propionate; a vinyl ether-based monomer such as vinyl ether; a heterocycle-containing (meth)acrylate such as tetrahydroflufuryl (meth)acrylate; a halogen atom-containing monomer such as fluorine (meth)acrylate; an alkoxysilyl group-containing monomer such as 3-(meth)acryloxypropyl trimethoxysilane and vinyltrimethoxysilane; a siloxane bond-containing monomer such as silicone (meth)acrylate; an alicyclic hydrocarbon group-containing (meth)acrylate such as cyclopentyl (meth)acrylate, cyclohexyl (meth)acrylate, bornyl (meth)acrylate, and isobornyl (meth)acrylate; and an aromatic hydrocarbon group-containing (meth)acrylate such as phenyl (meth)acrylate, benzyl (meth)acrylate, phenoxyethyl (meth)acrylate, and phenoxydiethylene glycol (meth)acrylate.

An example of the copolymerizable monomer also includes a polyfunctional monomer such as ethylene glycol di(meth)acrylate, diethylene glycol di(meth)acrylate, triethylene glycol di(meth)acrylate, tetraethylene glycol di(meth)acrylate, polyethylene glycol di(meth)acrylate, polypropylene glycol di(meth)acrylate, neopentyl glycol di(meth)acrylate, hexanediol di(meth)acrylate, pentaerythritol di(meth)acrylate, trimethylolpropane tri(meth)acrylate, pentaerythritol tri(meth)acrylate, dipentaerythritol hexa(meth)acrylate, epoxy (meth)acrylate, polyester (meth)acrylate, urethane (meth)acrylate, divinylbenzene, butyl di(meth)acrylate, and a hexyl di(meth)acrylate.

These copolymerizable monomers can be used alone or in combination. The mixing ratio thereof with respect to 100 parts by mass of the monomer component is, for example, 29.9 parts by mass or less, preferably 19 parts by mass or less, or more preferably 13 parts by mass or less. When the mixing ratio of the copolymerizable monomer is above the above-described upper limit, there may be a case where the mixing proportion of the alkyl (meth)acrylate is reduced, so that the glass transition temperature of the acrylic polymer is increased and the fluidity is reduced and thus, a sufficient pressure-sensitive adhesive area with respect to an adherend is not capable of being obtained and the fixing of the adherend is not capable of being performed.

In order to obtain the acrylic polymer by polymerizing the above-described monomer component, the monomer component is blended at the above-described mixing proportion to be reacted in a non-aqueous state. To be specific, a solution polymerization, a bulk polymerization, a photopolymerization, or the like is used. Preferably, a solution polymerization and a photopolymerization are used.

In the solution polymerization, along with the monomer component, a polymerization initiator is blended in an organic solvent to polymerize the monomer component.

Examples of the polymerization initiator include a thermal polymerization initiator and a photopolymerization initiator (described in detail later). In the case of the solution polymerization, preferably, a thermal polymerization initiator is used.

The thermal polymerization initiator is not particularly limited. An example thereof includes a thermal polymerization initiator that is usually used in the solution polymerization. Examples thereof include an azo-based polymerization initiator and a peroxide-based polymerization initiator.

Examples of the azo-based polymerization initiator include 2,2'-azobisisobutyronitrile (AIBN), 2,2'-azobis(4-methoxy-2,4-dimethylvaleronitrile), 2,2'-azobis(2,4-dimethylvaleronitrile), 2,2'-azobis(2-methylbutyronitrile), 1,1'-azobis(cyclohexane-1-carbonitrile), 2,2'-azobis(2,4,4-trimethylpentane), and dimethyl-2,2'-azobis(2-methylpropionate).

Examples of the peroxide-based polymerization initiator include benzoyl peroxide, t-butyl hydroperoxide, di-t-butyl peroxide, t-butylperoxy benzoate, dicumyl peroxide, 1,1-bis(t-butylperoxy)-3,3,5-trimethylcyclohexane, 1,1-bis(t-butylperoxy)cyclododecane, lauroyl peroxide, and hydrogen peroxide.

These thermal polymerization initiators can be used alone or in combination of two or more.

In the case of the solution polymerization, of the thermal polymerization initiators, preferably, a lipophilic thermal polymerization initiator is used, more preferably, an azo-based polymerization initiator is used, or particularly preferably, AIBN is used.

The mixing ratio of the polymerization initiator with respect to 100 parts by mass of the monomer component is, for example, 0.01 to 1 parts by mass.

The organic solvent may be used as long as it is capable of dissolving the monomer component. Examples thereof include an ester-based solvent such as ethyl acetate and butyl acetate; an aromatic hydrocarbon-based solvent such as toluene, xylene, and benzene; an aliphatic hydrocarbon-based solvent such as n-pentane, n-hexane, and n-heptane; an alicyclic hydrocarbon-based solvent such as cyclohexane and methyl cyclohexane; and a ketone-based solvent such as methyl ethyl ketone and methyl isobutyl ketone.

These organic solvents can be used alone or in combination of two or more. Preferably, an ester-based solvent is used, or more preferably, ethyl acetate is used.

The mixing ratio of the organic solvent with respect to 100 parts by mass of the monomer component is, for example, 10 to 1000 parts by mass, or preferably 20 to 500 parts by mass.

In the solution polymerization, a chain transfer agent, along with the monomer component and the polymerization initiator, is blended as required.

The chain transfer agent adjusts a molecular weight of the acrylic polymer. Examples thereof include a thiol-based compound such as lauryl mercaptan, glycidyl mercaptan, 2-mercaptoethanol, mercaptoacetic acid, 2-ethyl hexyl thioglycolate, and 2,3-dimethylcapto-1-propanol and an α-methyl styrene dimer. These chain transfer agents can be used alone or in combination. The mixing ratio thereof with respect to 100 parts by mass of the monomer component is, for example, 0.01 to 15 parts by mass.

The polymerization temperature in the solution polymerization is, for example, 40 to 100°C and the polymerization duration is, for example, 0.1 to 10 hours.

The acrylic polymer obtained in the solution polymerization is prepared as an organic solvent solution (a solution type), that is, as an acrylic polymer solution.

The solid content (the acrylic polymer) concentration in the acrylic polymer solution is, for example, 10 to 90 mass %, or preferably 20 to 80 mass %.

In the photopolymerization, the above-described monomer component and the photopolymerization initiator are blended, so that the monomer component is polymerized.

Examples of the photopolymerization initiator include a benzoin ether-based polymerization initiator, an acetophenone-based polymerization initiator, an α-hydroxyketone-based polymerization initiator, an aromatic sulfonyl chloride-based polymerization initiator, a photo active oxime-based polymerization initiator, a benzoin-based polymerization initiator, a benzyl-based polymerization initiator, a benzophenone-based polymerization initiator, a ketal-based polymerization initiator, a thioxanthone-based polymerization initiator, an α-aminoketone-based polymerization initiator, and an acylphosphine oxide-based polymerization initiator.

Examples of the benzoin ether-based polymerization initiator include benzoin methyl ether, benzoin ethyl ether, benzoin propyl ether, benzoin isopropyl ether, benzoin isobutyl ether, 2,2-dimethoxy-1,2-diphenylethane-1-one (trade name "IRGACURE 651" manufactured by BASF Japan Ltd.), and anisole methyl ether.

Examples of the acetophenone-based polymerization initiator include 2,2-diethoxyacetophenone, 2,2-dimethoxy-2-phenylacetophenone, 1-hydroxy-cyclohexyl phenyl ketone (trade name: "IRGACURE 184" manufactured by BASF Japan Ltd.), 4-phenoxydichloroacetophenone, and 4-t-butyl-dichloroacetophenone.

Examples of the α-hydroxyketone-based polymerization initiator include 2-hydroxy-2-methyl-1-phenyl-propane-1-one (trade name: "DAROCUR 1173", manufactured by BASF Japan Ltd.) and 1-[4-(2-hydroxyethoxy)-phenyl]-2-hydroxy-2-methyl-1-propane-1-one (trade name: "IRGACURE 2959", manufactured by BASF Japan Ltd.).

An example of the aromatic sulfonyl chloride-based polymerization initiator includes 2-naphthalenesulfonylchloride.

An example of the photo active oxime-based polymerization initiator includes 1-phenyl-1,1-propanedione-2-(o-ethoxycarbonyl)-oxime.

An example of the benzoin-based polymerization initiator includes benzoin.

An example of the benzyl-based polymerization initiator includes benzyl.

Examples of the benzophenone-based polymerization initiator include benzophenone, benzoylbenzoic acid, 3,3'-dimethyl-4-methoxybenzophenone, polyvinylbenzophenone, and α-hydroxycyclohexyl phenyl ketone.

An example of the ketal-based polymerization initiator includes benzyl dimethyl ketal.

Examples of the thioxanthone-based polymerization initiator include thioxanthone, 2-chlorothioxanthone, 2-methylthioxanthone, 2,4-dimethylthioxanthone, isopropylthioxanthone, 2,4-dichlorothioxanthone, 2,4-diethylthioxanthone, 2,4-diisopropylthioxanthone, and do decylthio xanthone.

Examples of the α-aminoketone-based polymerization initiator include 2-methyl-1-[4-(methylthio)phenyl]-2-morpholinopropan-1-one (trade name: "IRGACURE 907", manufactured by BASF Japan Ltd.) and 2-benzyl-2-dimethylamino-1-(4-morpholinophenyl)-butanone-1 (trade name: "IRGACURE 369", manufactured by BASF Japan Ltd.).

Examples of the acylphosphine oxide-based polymerization initiator include 2,4,6-trimethylbenzoyl diphenylphosphine oxide (trade name: "LUCIRIN TPO", manufactured by BASF Japan Ltd.) and bis(2,4,6-trimethylbenzoyl)-phenylphosphine oxide.

These photopolymerization initiators can be used alone or in combination of two or more.

As the photopolymerization initiator, preferably, a benzoin ether-based polymerization initiator and an acetophenone-based polymerization initiator are used, or more preferably, a benzoin ether-based polymerization initiator and an acetophenone-based polymerization initiator are used in combination, to be specific, 2,2-dimethoxy-1,2-diphenylethane-1-one and 1-hydroxy-cyclohexyl phenyl ketone are used in combination.

The mixing ratio of the photopolymerization initiator with respect to 100 parts by mass of the monomer component is, for example, 0.001 to 5 parts by mass, preferably 0.01 to 5 parts by mass, or more preferably 0.05 to 3 parts by mass.

When the mixing proportion of the photopolymerization initiator is below the above-described range, a duration required for the photopolymerization reaction may become excessively long. On the other hand, when the mixing proportion of the photopolymerization initiator is above the above-described range, there may be a case where the molecular weight of the acrylic polymer is reduced, so that unevenness in the pressure-sensitive adhesive properties of the pressure-sensitive adhesive layer (described later) occurs.

In the photopolymerization, examples of the irradiation light include visible light, an ultraviolet ray, and an electron beam (for example, X-ray, α-ray, β-ray, or γ-ray). Preferably, an ultraviolet ray is used.

In the photopolymerization, for example, the monomer component is capable of being collectively polymerized. Alternatively, first, as the first step, a part of the monomer component is polymerized (partially polymerized) and next, as the second step, the residual part is capable of being polymerized (being two-step polymerized) (a multi-step polymerization). Preferably, a two-step polymerization (the multi-step polymerization) is used.

To be specific, in the first step, a part of the monomer component is polymerized to prepare an acrylic prepolymer solution (syrup) and thereafter, the acrylic prepolymer solution is applied to a substrate. Then, in the second step, a residual part in the applied acrylic prepolymer solution is polymerized. In this way, the acrylic polymer is obtained.

The irradiation duration in the first step is, for example, 10 to 120 minutes. The irradiation duration in the second step is, for example, 1 second to 30 minutes, or preferably 5 seconds to 15 minutes.

When the monomer component is collectively polymerized, the application of light is capable of being performed continuously or intermittently.

When the monomer component is polymerized (partially polymerized) in the multi-step polymerization (the two-step polymerization), the application of light is capable of being performed continuously or intermittently in each of the steps in the multi-step polymerization (the two-step polymerization).

The acrylic polymer obtained by the photopolymerization is formed (retained in shape) in a solid state as a solventless polymer that does not contain an organic solvent.

The glass transition temperature of the acrylic polymer prepared in this way is preferably -70 to -10°C, or more preferably -55 to -20°C.

When the glass transition temperature of the acrylic polymer is above the above-described range, there may be a case where at the time of using the pressure-sensitive adhesive sheet including the pressure-sensitive adhesive layer that is formed from the pressure-sensitive adhesive composition for protection use, a pressure-sensitive adhesive force is insufficient, so that a float or a peeling occurs on processing thereof. When the glass transition temperature is below the above-described range, there may be a case where heavy peeling occurs (that is, an adhesive strength is excessively increased) in a region of higher-speed peel rate (a tensile rate), so that the operational efficiency is reduced.

The glass transition temperature is measured with a differential scanning calorimetry (DSC).

The acrylic polymer prepared in this way has an active hydrogen-containing group derived from an active hydrogen monomer.

The metal sulfate has a substituted group and has a metal ion as a counter ion.

Examples of the substituted group include a monovalent substituted group such as a polyoxyalkylene alkyl ether group and a polyoxyalkylene alkyl phenyl ether group (a polyoxyethylene alkyl phenyl ether group and the like) and a divalent substituted group such as a straight chain or branched chain alkylene group having 10 or more carbon atoms, a phenylene group, an alkyl group-substituted phenylene group, a halogen atom-substituted phenylene group, and a hetero atom-containing alkylene group.

The monovalent substituted group is replaced with respect to one metal sulfate and the divalent substituted group is replaced with respect to two metal sulfates.

As the substituted group, preferably, a monovalent substituted group is used, more preferably, a polyoxyalkylene alkyl ether group is used, or particularly preferably, a polyoxyethylene alkyl ether group is used.

The metal ion is not particularly limited and examples thereof include a monovalent metal ion and a divalent metal ion.

An example of the monovalent metal ion includes an alkali metal ion such as lithium, sodium, and potassium.

An example of the divalent metal ion includes an alkaline earth metal ion such as beryllium, magnesium, calcium, strontium, and barium.

Examples of the metal ion include Group 3 to Group 14 metal ions.

As the metal ion, preferably, a monovalent metal ion is used, more preferably, an alkali metal ion is used, or particularly preferably, a sodium ion is used.

To be specific, an example of the metal sulfate includes a metal sulfate such as polyoxyethylene alkyl ether sodium sulfate and polyoxyethylene alkyl ether potassium sulfate. Preferably, polyoxyethylene alkyl ether sodium sulfate is used.

These metal sulfates can be used alone or in combination of two or more.

The metal sulfate is prepared as a diluted solution (an organic solvent solution or an aqueous solution) by being diluted by a known organic solvent and/or water in accordance with its use and purpose. In such a case, the ratio of an active component (the metal sulfate) with respect to the diluted solution is, for example, 10 to 50 mass %.

In order to prepare the pressure-sensitive adhesive composition in a non-aqueous state, for example, the acrylic polymer and the metal sulfate are blended under the conditions where water is not substantially present.

To be specific, when the acrylic polymer is prepared as an acrylic polymer solution by the solution polymerization, the metal sulfate is added to the acrylic polymer solution. When the metal sulfate is prepared as an aqueous solution, an aqueous solution of the metal sulfate is added as it is to the acrylic polymer solution.

That is, the non-aqueous state includes a substantially non-aqueous state such as under the conditions where water is not included at all and under the conditions where water is slightly included.

When the acrylic polymer is prepared as an acrylic polymer solution by the solution polymerization, the content of water (to be specific, water derived from the aqueous solution of the metal sulfate) in the pressure-sensitive adhesive composition prepared in a substantially non-aqueous state with respect to the acrylic polymer solution (the total amount of the monomer component, the polymerization initiator, the organic solvent, and the chain transfer agent) is, for example, 10 mass % or less, preferably 7.5 mass % or less, or more preferably 6 mass % or less.

The mixing ratio of the metal sulfate (the mixing ratio of the active component (the solid content) when the metal sulfate is prepared as a diluted solution) with respect to 100 parts by mass of the acrylic polymer is, for example, 0.1 to 10 parts by mass, preferably 1 to 8 parts by mass, or more preferably 2 to 7 parts by mass. When the mixing proportion of the metal sulfate is above the above-described range, there may be a case where the cohesive force of a pressure-sensitive adhesive layer 1 (described later) is excessively increased, so that the pressure-sensitive adhesive properties, and the anchoring properties with respect to a substrate 2 (described later) are reduced. On the other hand, when the mixing proportion of the metal sulfate is below the above-described range, there may be a case where the formation of cross-linking is insufficient and the cohesive force is reduced, so that the adhesiveness with respect to the substrate 2 is reduced and thus, an adhesive residue (a pressure-sensitive adhesive residue) is generated.

In this way, a pressure-sensitive adhesive composition (a varnish) that contains a solvent is obtained. The solid content of the pressure-sensitive adhesive composition (the varnish) is, for example, 5 to 80 mass %, preferably 10 to 70 mass %, or more preferably 15 to 60 mass %.

On the other hand, in order to prepare the pressure-sensitive adhesive composition in a non-aqueous state, the acrylic polymer during the polymerization and the metal sulfate are blended under the conditions where water is not substantially present and thereafter, the residual monomer component can be polymerized.

To be specific, when the acrylic polymer is prepared by the photopolymerization, first, the metal sulfate is added to the acrylic prepolymer solution (syrup).

When the metal sulfate is prepared as an aqueous solution, an aqueous solution of the metal sulfate is added as it is to the acrylic prepolymer solution (syrup). Alternatively, the aqueous solution of the metal sulfate is dried; water is distilled off; and the metal sulfate only (that is, 100 mass % of the active component) is added to the acrylic prepolymer solution (syrup).

That is, the non-aqueous state includes, as described above, a substantially non-aqueous state such as under the conditions where water is not included at all and under the conditions where water is slightly included.

When the acrylic polymer is prepared via the acrylic prepolymer solution (syrup) by the photopolymerization (the first-step polymerization in the two-step polymerization), the content of the water (to be specific, the water derived from the aqueous solution of the metal sulfate) with respect to the acrylic prepolymer solution (the total amount of the monomer component, the polymerization initiator, and the chain transfer agent) is, for example, 20 mass % or less, preferably 15 mass % or less, more preferably 10 mass % or less, furthermore, 7.5 mass % or less, furthermore 5 mass % or less, or furthermore 2.5 mass % or less.

In this way, a precursor composition is prepared.

Thereafter, the residual monomer component is photopolymerized.

To be specific, the precursor composition is applied to a substrate and light is applied thereto. In this way, the residual monomer component is photopolymerized, so that a pressure-sensitive adhesive composition in a solid state that is retained in shape on the substrate is obtained.

The mixing ratio of the metal sulfate with respect to the acrylic prepolymer solution (syrup) (the mixing ratio of the metal sulfate is the mixing ratio of the active component (the solid content) when the metal sulfate is prepared as a diluted solution) is, for example, 0.1 to 10 parts by mass, preferably 1 to 8 parts by mass, or more preferably 2 to 7 parts by mass with respect to 100 parts by mass of the charged monomer component. When the mixing proportion of the metal sulfate is above the above-described range, there may be a case where the cohesive force of the pressure-sensitive adhesive layer 1 is excessively increased, so that the pressure-sensitive adhesive properties, and the anchoring properties with respect to the substrate 2 are reduced. On the other hand, when the mixing proportion of the metal sulfate is below the above-described range, there may be a case where the formation of cross-linking is insufficient and the cohesive force is reduced, so that the adhesiveness with respect to the substrate 2 is reduced and thus, an adhesive residue (a pressure-sensitive adhesive residue) is generated.

In this way, a pressure-sensitive adhesive composition (a varnish) that contains a solvent is obtained.

An additive can be blended into the pressure-sensitive adhesive composition at an appropriate proportion. Examples of the additive include a cross-linking agent and a tackifier, and furthermore, a pigment, a filler, a leveling agent, a dispersant, a plasticizer, a stabilizer, an antioxidant, an oxidation inhibitor, and a preservative.

Examples of the cross-linking agent include an isocyanate cross-linking agent, an epoxy cross-linking agent, a melamine-based resin, an aziridine derivative, and a metal chelate compound. These cross-linking agents can be used alone or in combination of two or more.

Examples of the tackifier include a rosin-based resin, a terpene-based resin, an aliphatic petroleum resin, an aromatic petroleum resin, an alicyclic petroleum resin, a copolymerized petroleum resin, and an elastomer. These tackifiers can be used alone or in combination of two or more.

These additives can be used alone or in combination.

FIG. 1 shows a sectional view of one embodiment of a pressure-sensitive adhesive sheet of the present invention.

Next, one embodiment of the pressure-sensitive adhesive sheet of the present invention is described with reference to FIG. 1.

When the pressure-sensitive adhesive composition is obtained as an acrylic polymer solution (a varnish), the pressure-sensitive adhesive composition is applied onto the substrate 2 to be then dried, so that the pressure-sensitive adhesive composition is retained in shape and the pressure-sensitive adhesive layer 1 is formed.

Examples of the substrate 2 include a resin-based substrate such as a plastic film or sheet; a paper-based substrate such as paper; a fiber-based substrate such as cloth, a non-woven fabric, or a net; a metal-based substrate such as a metal foil or a metal plate; a rubber-based substrate such as a rubber sheet; and a foaming material such as a foaming sheet or a laminate thereof (in particular, a laminate of a resin-based substrate with another substrate, a laminate of resin-based substrates with each other, or the like).

As the substrate 2, in view of being capable of obtaining a pressure-sensitive adhesive sheet 5 having high transparency, preferably, a resin-based substrate is used.

Examples of a resin that forms the resin-based substrate include a fluorin-based resin such as polytetrafluoroethylene (registered trademark: "Teflon"); a polyester-based resin such as polyethylene terephthalate (PET), polyethylene naphthalate (PEN), and polybutylene terephthalate (PBT); an olefin-based resin having an α-olefin as a monomer component such as polyethylene (PE), polypropylene (PP), an ethylene-propylene copolymer, and an ethylene-vinyl acetate copolymer (EVA); polyvinyl chloride (PVC); a vinyl acetate-based resin; polyphenylene sulfide (PPS); an amide-based resin such as polyamide (nylon) and wholly aromatic polyamide (aramid); a polyimide resin; a polycarbonate resin; an acrylic resin; a polystyrene resin; polyether ether ketone (PEEK); polyether sulfone; an acetate resin; and triacetylcellulose.

The thickness of the substrate 2 is, for example, 1 to 150 µm, or preferably 5 to 100 µm

In view of improving the adhesiveness to the pressure-sensitive adhesive layer 1, an appropriate surface treatment such as a physical treatment including, for example, a corona treatment or a plasma treatment and a chemical treatment including, for example, a primer can be applied onto the substrate 2. Furthermore, a primer layer (not shown) can be also provided between the substrate 2 and the pressure-sensitive adhesive layer 1. The thickness of the primer layer is, for example, 0.05 to 1 µm, or preferably 0.1 to 1 µm.

Also, a release liner 3 shown by a phantom line can be laminated on the pressure-sensitive adhesive layer 1.

Examples of the release liner 3 include a resin sheet, paper, a foaming material, and a metal foil. Preferably, a resin sheet is used. Examples of a resin that forms the resin sheet include a polyester resin such as PET, a polyolefin such as polypropylene and an ethylene-propylene copolymer, and a polyvinyl chloride. The thickness of the release liner 3 is appropriately set.

On the other hand, when the release liner 3 is not laminated, in order to obtain the release properties of the substrate 2 at the time of winding the pressure-sensitive adhesive sheet 5 in a roll shape from the pressure-sensitive adhesive layer 1, a back surface treatment can be applied to the lower surface of the substrate 2 with a release treating agent (for example, a silicone-based release agent, a fluorine-based release agent, a long chain alkyl-based release agent).

In order to apply the pressure-sensitive adhesive composition to the substrate 2, for example, an applicator, a gravure roll coater, a reverse roll coater, a kiss roll coater, a dip roll coater, a bar coater, a knife coater, or a spray coater is used. Preferably, an applicator is used.

In the above-described method, the pressure-sensitive adhesive composition is directly applied to the substrate 2. Alternatively, for example, after the pressure-sensitive adhesive composition is applied to another substrate, the obtained pressure-sensitive adhesive layer 1 can be transferred onto the substrate 2.

The drying temperature for retaining the pressure-sensitive adhesive composition in shape is, for example, 50 to 150°C, or preferably 70 to 120°C. The drying duration is, for example, 10 seconds to 10 minutes, or preferably 30 seconds to 5 minutes. The thickness of the pressure-sensitive adhesive layer 1 after shape retention is, for example, 1 to 100 µm, or preferably 5 to 80 µm.

The gel fraction (1) of the pressure-sensitive adhesive layer 1 that is retained in shape (after the shape retention) is, for example, 30 mass % or less, preferably 20 mass % or less, more preferably 10 mass % or less, or particularly preferably 5 mass % or less, and is 0 mass % or more.

The gel fraction (1) of the pressure-sensitive adhesive layer 1 that is retained in shape (after the shape retention) is defined as described below.

Gel fraction (1): a percentage of a dry mass of an ethyl acetate-insoluble portion with respect to a mass of the pressure-sensitive adhesive layer 1 before immersion at the time of immersing the pressure-sensitive adhesive layer 1, which is obtained by being applied onto the substrate 2 to be retained in shape, is laminated on the substrate 2, and has a thickness of 10 µm, in an ethyl acetate at 23°C for seven days.

In the measurement of the gel fraction (1), in order to apply the pressure-sensitive adhesive composition to the substrate 2 to be retained in shape, after the pressure-sensitive adhesive composition is applied onto the substrate 2, the resulting product is dried at 120°C for three minutes with an oven with internal air circulation.

In the measurement of the gel fraction (1), a Teflon sheet is used as the substrate 2 of the pressure-sensitive adhesive composition.

The gel fraction (1) is obtained as follows: (dry mass of ethyl acetate-insoluble portion) / (mass of pressure-sensitive adhesive layer before immersion) × 100. The gel fraction (2) after aging to be described later is obtained in the same manner.

After the shape retention, the pressure-sensitive adhesive layer 1 is heated to be allowed to stand. That is, the pressure-sensitive adhesive layer 1 is subjected to aging.

The heating temperature of the aging is, for example, 40 to 120°C, or preferably 50 to 100°C and the heating duration of the aging is, for example, 1 to 14 days, or preferably 3 to 10 days.

By the aging, a cross-linking reaction of the acrylic polymer based on the metal sulfate is quickly progressed.

To be specific, when the acrylic polymer having an active hydrogen-containing group and the metal sulfate are blended, an active hydrogen-containing group gathers around a sulfate ion by an electrostatic attractive force that applies between the active hydrogen-containing group and the sulfate ion. That is, this is a state where the active hydrogen-containing groups having polarity are close to each other and the sulfate ion is present near thereto. Thus, a dehydration condensation reaction or the like occurs and the acrylic polymers that are close to each other generate a cross-linking reaction via the active hydrogen-containing group, so that a three-dimensional network is formed.

The thickness of the pressure-sensitive adhesive layer 1 that is obtained in this way and is cross-linked is, for example, 1 to 100 µm, or preferably 5 to 70 µm

The gel fraction (2) of the pressure-sensitive adhesive layer 1 after the aging is, for example, 50 mass % or more, preferably 60 mass % or more, or more preferably 70 mass % or more, and is 100 mass % or less.

The gel fraction (2) of the pressure-sensitive adhesive layer 1 after the aging is defined as described below.

Gel fraction (2): a percentage of a dry mass of an ethyl acetate-insoluble portion with respect to a mass of the pressure-sensitive adhesive layer 1 before immersion at the time of immersing the pressure-sensitive adhesive layer 1, which is obtained by heating at 80°C for seven days after being applied onto the substrate 2 to be retained in shape so as to have a thickness of 10 µm and is laminated on the substrate 2, in an ethyl acetate at 23°C for seven days.

The measurement method of the gel fraction (2) of the pressure-sensitive adhesive layer 1 after the aging is the same as the above-described measurement method of the gel fraction (1) of the pressure-sensitive adhesive layer 1 that is retained in shape (after the shape retention), except that heating is performed at 80°C for seven days after the shape retention.

The 500 % modulus at 25°C of the pressure-sensitive adhesive layer 1 is, for example, 0.05 N/mm² or more, or preferably 0.10 N/mm² or more, and is 1 N/mm² or less.

In this way, the pressure-sensitive adhesive sheet 5 that includes the substrate 2 and the pressure-sensitive adhesive layer 1 that is laminated thereon can be obtained.

When the pressure-sensitive adhesive composition is prepared via the precursor composition based on the photopolymerization, first, the precursor composition is applied onto the substrate 2 and thereafter, the release liner 3 shown by the phantom line is attached onto the precursor composition. Then, light is applied to the precursor composition and the residual monomer component is photopolymerized, so that the pressure-sensitive adhesive layer 1 prepared from the pressure-sensitive adhesive composition that is retained in shape on the substrate 2 is obtained.

The gel fraction (1) of the pressure-sensitive adhesive layer 1 that is retained in shape is defined in the same manner as described above. To be specific, in the measurement of the gel fraction (1), in order to apply the pressure-sensitive adhesive composition to the substrate 2 to be retained in shape, after the precursor composition is applied onto the substrate 2, the release liner 3 is attached onto the precursor composition and then, an ultraviolet ray is applied thereto for one minute in a dark room.

Thereafter, the pressure-sensitive adhesive layer 1 is subjected to aging under the same conditions as those described above.

The gel fraction (2) of the pressure-sensitive adhesive layer 1 that is subjected to aging is defined in the same manner as described above.

The pressure-sensitive adhesive sheet 5 that includes the substrate 2, the pressure-sensitive adhesive layer 1 that is formed thereon, and the release liner 3 that is formed thereon is obtained.

The pressure-sensitive adhesive composition of the present invention is prepared in a non-aqueous state from the acrylic polymer having an active hydrogen-containing group and the metal sulfate having a substituted group, so that the reaction thereof is quickly progressed when it is heated, while the reaction thereof is hardly progressed at a normal temperature.

Thus, the pressure-sensitive adhesive composition of the present invention has a long pot life and is capable of quickly progressing its reaction when it is heated.

In the pressure-sensitive adhesive sheet 5, the pressure-sensitive adhesive layer 1 formed from the pressure-sensitive adhesive composition in which the reaction is progressed by heating exhibits an excellent cohesive force.

That is, when the pressure-sensitive adhesive sheet 5 is, for example, attached to an adherend such as stainless steel and thereafter, the pressure-sensitive adhesive sheet 5 is peeled from the adherend, a cohesive failure (a failure in the inside of the pressure-sensitive adhesive layer 1) or an anchoring failure (a peeling between the pressure-sensitive adhesive layer 1 and the substrate 2) does not occur; furthermore, an interfacial failure (a peeling between the adherend and the pressure-sensitive adhesive layer 1) occurs; and an adhesive residue (a residue of the pressure-sensitive adhesive layer 1) on the adherend can be prevented from occurring.

In the embodiment in FIG. 1, the substrate 2 is provided in the pressure-sensitive adhesive sheet 5. Alternatively, for example, the pressure-sensitive adhesive sheet 5 can be formed of the pressure-sensitive adhesive layer 1 as a substrateless pressure-sensitive adhesive sheet that does not include the substrate 2. To be specific, the release liner 3 is used instead of the substrate 2 and the pressure-sensitive adhesive composition is applied thereto and thereafter, the shape retention and the aging are performed.

### Examples

In the following, the present invention will now be described in more detail by way of Examples and Comparative Examples. However, the present invention is not limited to the following Examples and Comparative Examples.

### Example 1

In a reaction vessel equipped with a condenser tube, a nitrogen introducing tube, a thermometer, and a stirrer, 190 parts by mass of a butyl acrylate, 10 parts by mass of an acrylic acid, 300 parts by mass of an ethyl acetate, and 0.4 parts by mass of 2,2'-azobisisobutyronitrile were charged to be polymerized, while the atmosphere therein was replaced with nitrogen. The inner temperature of the vessel was retained at 56 ± 1°C during the polymerization. The reaction was continued, while the inner temperature of the vessel was retained at 56 ± 1°C for five hours after the start of the polymerization, to be then allowed to mature for three hours. In this way, an acrylic polymer solution containing an acrylic polymer was prepared.

Next, 5 parts by mass of a polyoxyethylene alkyl ether sodium sulfate (trade name: "LATEMULE E118-B", a metal sulfate having a substituted group, an aqueous solution of 26 mass % of an active component, manufactured by Kao Corporation), as an amount of the active component, with respect to 100 parts by mass of the acrylic polymer was added to the acrylic polymer solution, so that a pressure-sensitive adhesive composition was prepared.

Thereafter, the pressure-sensitive adhesive composition was applied onto a PET film (trade name: "Lumirror S10-25", a thickness of 25 µm, manufactured by TORAY INDUSTRIES, INC.) using an applicator (manufactured by TESTER SANGYO CO., LTD.) so that the thickness thereof after shape retention was 10 µm Thereafter, the resulting product was dried at 120°C for three minutes with an oven with internal air circulation to retain the pressure-sensitive adhesive composition in shape, so that a pressure-sensitive adhesive layer was formed (ref: solid lines in FIG. 1).

Thereafter, the pressure-sensitive adhesive layer was allowed to stand (subjected to aging) at 80°C for seven days, so that a cross-linking reaction of the pressure-sensitive adhesive layer was progressed. In this way, a pressure-sensitive adhesive sheet was obtained.

### Example 2

A pressure-sensitive adhesive composition was prepared and subsequently, a pressure-sensitive adhesive layer was formed to be then subjected to aging, so that a pressure-sensitive adhesive sheet was obtained in the same manner as in Example 1, except that the number of parts of added polyoxyethylene alkyl ether sodium sulfate was changed from 5 parts by mass to 3 parts by mass as an amount of the active component.

### Example 3

A pressure-sensitive adhesive composition was prepared and subsequently, a pressure-sensitive adhesive layer was formed to be then subjected to aging, so that a pressure-sensitive adhesive sheet was obtained in the same manner as in Example 1, except that 192.4 parts by mass of a 2-ethylhexyl acrylate and 7.6 parts by mass of a 2-hydroxyethyl acrylate were charged instead of 190 parts by mass of the butyl acrylate and 10 parts by mass of the acrylic acid.

### Example 4

A pressure-sensitive adhesive composition was prepared and subsequently, a pressure-sensitive adhesive layer was formed to be then subjected to aging, so that a pressure-sensitive adhesive sheet was obtained in the same manner as in Example 1, except that 5 parts by mass of a polyoxyethylene lauryl ether sodium sulfate (trade name: "ADEKA HOPE YES25", a metal sulfate having a substituted group, an aqueous solution of 25.2 mass % of an active component, manufactured by ADEKA CORPORATION), as an amount of the active component, was added instead of the polyoxyethylene alkyl ether sodium sulfate.

### Example 5

In a reaction vessel equipped with a condenser tube, a nitrogen introducing tube, a thermometer, a stirrer, and an ultraviolet ray irradiation device, 450 parts by mass of a 2-ethylhexyl acrylate, 50 parts by mass of an acrylic acid, 0.25 parts by mass of 2,2-dimethoxy-1,2-diphenylethane-1-one (trade name: "IRGACURE 651", 100 mass % of an active component, manufactured by BASF Japan Ltd.), and 0.25 parts by mass of 1-hydroxy-cyclohexyl-phenylketone (trade name: "IRGACURE 184", 100 mass % of an active component, manufactured by BASF Japan Ltd.) were charged and black light (an ultraviolet ray) was applied thereto for 30 minutes, while the atmosphere therein was replaced with nitrogen. In this way, an acrylic prepolymer solution (syrup) in which a part of the monomer component was polymerized was obtained.

Separately, a polyoxyethylene alkyl ether sodium sulfate (trade name: "LATEMULE E118-B", a metal sulfate having a substituted group, an aqueous solution of 26 mass % of an active component, manufactured by Kao Corporation) was dried and water was distilled off, so that a polyoxyethylene alkyl ether sodium sulfate having about 100 mass % of the active component was obtained.

Then, 5 parts by mass of the polyoxyethylene alkyl ether sodium sulfate having about 100 mass % of the active component with respect to 100 parts by mass of the charged monomer component was added to the acrylic prepolymer solution, so that a precursor composition was prepared.

Thereafter, the precursor composition was applied onto a PET film (trade name: "Lumirror S10-25", a thickness of 25 µm, manufactured by TORAY INDUSTRIES, INC.) using an applicator (manufactured by TESTER SANGYO CO., LTD.) so that the thickness thereof after shape retention was 10 µm. Subsequently, after a release liner made of a PET film was attached onto the precursor composition, an ultraviolet ray was applied thereto for one minute in a dark room, so that a pressure-sensitive adhesive layer was retained in shape between the two PET films (ref: the phantom line and the solid lines in FIG. 1).

Thereafter, the pressure-sensitive adhesive layer was allowed to stand (subjected to aging) at 80°C for seven days, so that a cross-linking reaction of the pressure-sensitive adhesive layer was progressed. In this way, a pressure-sensitive adhesive sheet was obtained.

### Example 6

A pressure-sensitive adhesive layer was formed to be then subjected to aging, so that a pressure-sensitive adhesive sheet was obtained in the same manner as in Example 5, except that the irradiation duration of the ultraviolet ray at the time of the shape retention of the pressure-sensitive adhesive layer was changed from one minute to six minutes.

### Comparative Example 1

A pressure-sensitive adhesive composition was prepared and subsequently, a pressure-sensitive adhesive layer was formed to be then subjected to aging, so that a pressure-sensitive adhesive sheet was obtained in the same manner as in Example 1, except that 5 parts by mass of an ammonium lauryl sulfate (manufactured by Kao Corporation, trade name: "EMAL AD-25R", an aqueous solution of 24 mass % of an active component), as an amount of the active component, was added instead of the polyoxyethylene alkyl ether sodium sulfate.

### Comparative Example 2

A pressure-sensitive adhesive composition was prepared and subsequently, a pressure-sensitive adhesive layer was formed to be then subjected to aging, so that a pressure-sensitive adhesive sheet was obtained in the same manner as in Example 1, except that 5 parts by mass of an octyl dimethyl ethyl ammonium ethyl sulfate (trade name: "CATIOGEN ES-O", a mixed solution of water and an organic solvent of 50 mass % of an active component, manufactured by DAI-ICHI KOGYO SEIYAKU CO., LTD.), as an amount of the active component, was added instead of the polyoxyethylene alkyl ether sodium sulfate.

### Comparative Example 3

A pressure-sensitive adhesive composition was prepared and subsequently, a pressure-sensitive adhesive layer was formed to be then subjected to aging, so that a pressure-sensitive adhesive sheet was obtained in the same manner as in Example 1, except that 5 parts by mass of a polyoxyethylene alkyl ether (trade name: "EMULGEN 1135S-70", nonionic-based, an aqueous solution of 70 mass % of an active component, manufactured by Kao Corporation), as an amount of the active component, was added instead of the polyoxyethylene alkyl ether sodium sulfate.

### Comparative Example 4

A pressure-sensitive adhesive composition was prepared and subsequently, a pressure-sensitive adhesive layer was formed to be then subjected to aging, so that a pressure-sensitive adhesive sheet was obtained in the same manner as in Example 1, except that 140 parts by mass of a 2-ethylhexyl acrylate, 40 parts by mass of an N-vinylcaprolactam, and 20 parts by mass of an isobornyl acrylate were charged instead of 190 parts by mass of the butyl acrylate and 10 parts by mass of the acrylic acid.

### Comparative Example 5

A pressure-sensitive adhesive composition was prepared and subsequently, a pressure-sensitive adhesive layer was formed to be then subjected to aging, so that a pressure-sensitive adhesive sheet was obtained in the same manner as in Example 1, except that 5 parts by mass of a polyoxyethylene lauryl ether ammonium sulfate (trade name: "HITENOL LA-12", an organic solvent solution of 94 mass % of an active component, manufactured by DAI-ICHI KOGYO SEIYAKU CO., LTD.), as an amount of the active component, was added instead of the polyoxyethylene alkyl ether sodium sulfate.

### Comparative Example 6

A pressure-sensitive adhesive composition was prepared and subsequently, a pressure-sensitive adhesive layer was formed to be then subjected to aging, so that a pressure-sensitive adhesive sheet was obtained in the same manner as in Example 1, except that 5 parts by mass of an alkyl diphenyl ether disulfonate sodium (trade name: "PELEX SS-H", an aqueous solution of 50 mass % of an active component, manufactured by Kao Corporation), as an amount of the active component, was added instead of the polyoxyethylene alkyl ether sodium sulfate.

### Comparative Example 7

A pressure-sensitive adhesive composition was prepared and subsequently, a pressure-sensitive adhesive layer was formed to be then subjected to aging, so that a pressure-sensitive adhesive sheet was obtained in the same manner as in Example 1, except that 5 parts by mass of a dialkyl sulfosuccinate sodium (trade name: "PELEX CS", a white and solid state of 45 mass % of an active component, manufactured by Kao Corporation), as an amount of the active component, was added instead of the polyoxyethylene alkyl ether sodium sulfate.

### Comparative Example 8

A pressure-sensitive adhesive composition was prepared and subsequently, a pressure-sensitive adhesive layer was formed to be then subjected to aging, so that a pressure-sensitive adhesive sheet was obtained in the same manner as in Example 1, except that 5 parts by mass of a polyoxyethylene alkyl ether potassium phosphate (trade name: "ELECTROSTRIPPER F", an aqueous paste of 70 mass % of an active component, manufactured by Kao Corporation), as an amount of the active component, was added instead of the polyoxyethylene alkyl ether sodium sulfate.

### Comparative Example 9

A pressure-sensitive adhesive composition was prepared and subsequently, a pressure-sensitive adhesive layer was formed to be then subjected to aging, so that a pressure-sensitive adhesive sheet was obtained in the same manner as in Example 1, except that 5 parts by mass of an isocyanate cross-linking agent that was diluted with an ethyl acetate to 10 mass % (trade name: "BURNOCK DNW5010", an organic solvent solution of 78 mass % of an active component, manufactured by DIC CORPORATION), as an amount of the active component, was added instead of the polyoxyethylene alkyl ether sodium sulfate.

### Comparative Example 10

A pressure-sensitive adhesive composition was prepared and subsequently, a pressure-sensitive adhesive layer was formed to be then subjected to aging, so that a pressure-sensitive adhesive sheet was obtained in the same manner as in Example 1, except that 5 parts by mass of an epoxy cross-linking agent that was diluted with an ethyl acetate to 10 mass % (trade name: "TETRAD-C", 1,3-bis(N,N-glycidylaminomethyl)cyclohexane, 100 mass % of an active component, manufactured by MITSUBISHI GAS CHEMICAL COMPANY) was added instead of the polyoxyethylene alkyl ether sodium sulfate.

### Comparative Example 11

In a reaction vessel equipped with a condenser tube, a nitrogen introducing tube, a thermometer, and a stirrer, 22.8 parts by mass of water and 0.051 parts by mass of 2,2'-azobis[N-(2-carboxyethyl)-2-methylpropionamidine]n-hydrate (trade name:"VA-057", a water-soluble azo-based polymerization initiator, manufactured by Wako Pure Chemical Industries, Ltd.) were charged. Next, an emulsion of a monomer component obtained by emulsifying 48.7 parts by mass of a butyl acrylate, 2 parts by mass of an acrylic acid, 1 part by mass of a polyoxyethylene alkyl ether sodium sulfate (trade name: "LATEMULE E118-B", a metal sulfate having a substituted group, an aqueous solution of 26 mass % of an active component, manufactured by Kao Corporation) as an amount of the active component, 0.025 parts by mass of a tert-lauryl mercaptan, and 12.6 parts by mass of water was added dropwise thereto over four hours, while the atmosphere therein was replaced with nitrogen, so that the monomer component was emulsion polymerized. The inner temperature of the vessel was retained at 60 ± 1°C during the polymerization. The reaction was continued, while the inner temperature of the vessel was retained at 60 ± 1°C for four hours after the start of the polymerization, to be then allowed to mature for three hours. Thereafter, a pH was adjusted to be 7 with an aqueous ammonia with a concentration of 10 mass %, so that an emulsion of the acrylic polymer was prepared.

Next, 5 parts by mass of a polyoxyethylene alkyl ether sodium sulfate (trade name: "LATEMULE E118-B", a metal sulfate having a substituted group, an aqueous solution of 26 mass % of an active component, manufactured by Kao Corporation), as an amount of the active component, with respect to 100 parts by mass of the acrylic polymer was added to the emulsion, so that a pressure-sensitive adhesive composition was prepared.

Thereafter, a pressure-sensitive adhesive layer was formed to be then subjected to aging, so that a pressure-sensitive adhesive sheet was obtained in the same manner as in Example 1.

### (Evaluation)

### 1. Gel Fraction

### 1-1. Gel Fraction (1) after Shape Retention

The following gel fraction (1) after shape retention of each of the pressure-sensitive adhesive compositions in Examples and Comparative Examples was measured. The results are shown in Tables 1 to 3.

Gel fraction (1) after shape retention: a percentage of a dry mass of an ethyl acetate-insoluble portion with respect to a mass of a pressure-sensitive adhesive layer before immersion at the time of immersing the pressure-sensitive adhesive layer, which is obtained by being applied onto a substrate to be retained in shape, is laminated on the substrate, and has a thickness of 10 µm, in an ethyl acetate at 23°C for seven days.

In Examples 1 to 4 and Comparative Examples 1 to 11, the pressure-sensitive adhesive composition was applied onto a substrate to be then dried at 120°C for three minutes with an oven with internal air circulation, so that the pressure-sensitive adhesive composition was retained in shape.

On the other hand, in Examples 5 and 6, a precursor composition was applied onto the substrate and thereafter, a release liner made of a PET film was attached onto the precursor composition. Then, an ultraviolet ray was applied to the precursor composition in Examples 5 and 6 for one minute and six minute in a dark room, respectively, so that a pressure-sensitive adhesive layer was retained in shape. Thereafter, the release liner was peeled off.

As the substrate, a Teflon sheet was used.

### 1-2. Gel Fraction (2) after Aging

The following gel fraction (2) after aging of each of the pressure-sensitive adhesive compositions in Examples and Comparative Examples was measured. The results are shown in Tables 1 to 3.

Gel fraction (2) after aging: a percentage of a dry mass of an ethyl acetate-insoluble portion with respect to a mass of a pressure-sensitive adhesive layer before immersion at the time of immersing the pressure-sensitive adhesive layer, which is obtained by heating (being subjected to aging) at 80°C for seven days after being applied onto a substrate to be retained in shape so as to have a thickness of 10 µm and is laminated on the substrate, in an ethyl acetate at 23°C for seven days.

In Examples 1 to 4 and Comparative Examples 1 to 11, the pressure-sensitive adhesive composition was applied onto a substrate to be then dried at 120°C for three minutes with an oven with internal air circulation, so that the pressure-sensitive adhesive composition was retained in shape.

On the other hand, in Examples 5 and 6, a precursor composition was applied onto the substrate and thereafter, a release liner made of a PET film was attached onto the precursor composition. Then, an ultraviolet ray was applied to the precursor composition in Examples 5 and 6 for one minute and six minute in a dark room, respectively, so that a pressure-sensitive adhesive layer was retained in shape. Thereafter, the release liner was peeled off.

### As the substrate, a Teflon sheet was used.

### 2. Pressure-Sensitive Adhesive Force

In the above-described "1-2. Gel Fraction (2) after Aging", the pressure-sensitive adhesive sheet including the pressure-sensitive adhesive layer after aging was processed to have a width of 20 mm and next, the pressure-sensitive adhesive layer (the pressure-sensitive adhesive layer in which the release liner was peeled off in Examples 5 and 6) was attached to a stainless steel plate. Subsequently, the pressure-sensitive adhesive sheet was compressively bonded to the stainless steel plate by one reciprocation of a 2-kg rubber roller to be then allowed to stand for 30 minutes. Thereafter, the pressure-sensitive adhesive sheet was peeled from the stainless steel plate at a peel angle of 180 degrees and a peel rate of 300 mm/min, so that the pressure-sensitive adhesive force (N/20 mm) of the pressure-sensitive adhesive sheet with respect to the stainless steel plate was measured. The results are shown in Tables 1 to 3.

### 3. Adhesive Residue Properties

The adhesive residue properties at the time of measurement of the above-described "2. Pressure-Sensitive Adhesive Force" were evaluated as the cohesive force of the pressure-sensitive adhesive layer based on the following criteria. The results are shown in Tables 1 to 3.

Good: it was confirmed that an interfacial failure (a peeling between the stainless steel plate and the pressure-sensitive adhesive layer) occurred and an adhesive residue (a residue of the pressure-sensitive adhesive layer) was not present on the stainless steel plate.

Bad: it was confirmed that a cohesive failure (a failure in the inside of the pressure-sensitive adhesive layer) or an anchoring failure (a peeling between the pressure-sensitive adhesive layer and the PET film (substrate)) occurred and an adhesive residue (a residue of the pressure-sensitive adhesive layer) was present on the stainless steel plate.

### 4. Pot Life

The viscosity at 25°C of each of the prepared pressure-sensitive adhesive compositions (a precursor solution applied by an ultraviolet ray for one minute and six minute in Examples 5 and 6, respectively) immediately after the preparation and after being allowed to stand at 25°C for six days after the preparation was measured, respectively and the pot life thereof was evaluated based on the following criteria. The viscosity was measured with a B-type viscometer (rotor No.4, the number of revolutions of 20 rpm).

Good: the viscosity after being allowed to stand for six days with respect to that immediately after the preparation was less than 150 %.

Bad: the viscosity after being allowed to stand for six days with respect to that immediately after the preparation was not less than 150 %.

### 5.500% Modulus

In the above-described "1-2. Gel Fraction (2) after Aging", the 500 % modulus at 25°C of the pressure-sensitive adhesive layer after aging was measured.

To be specific, first, a sample in which the pressure-sensitive adhesive layer was rounded into a cylindrical shape having a diameter of about 2 mm and a length of 30 mm was fabricated. Thereafter, both ends in the longitudinal direction of the sample was fixed to chucks of a tensile testing machine (a TENSILON universal testing machine) (a distance between the chucks of 10 mm) to be pulled at a rate of 50 mm/min, so that a stress change at the time of deforming the sample was measured.

To be more specific, a stress value per area at the time of 50 mm in a distance between the chucks of the sample was calculated as the 500 % modulus.

The results are shown in Tables 1 to 3.

[Table 1]

**Table 1**

| Type | | Examples | | | | | |
|---|---|---|---|---|---|---|---|
| | | 1 | 2 | 3 | 4 | 5 | 6 |
| Monomer Component | BA | 95 | 95 | - | 95 | - | - |
| | 2EHA | - | - | 96.2 | - | 90 | 90 |
| | NVC | - | - | - | - | - | - |
| | IBXA | - | - | - | - | - | - |
| | AA | 5 | 5 | - | 5 | 10 | 10 |
| | HEA | - | - | 3.8 | - | - | - |
| Polymerization Initiator | AIBN | 0.2 | 0.2 | 0.2 | 0.2 | - | - |
| | VA-057 | - | - | - | - | - | - |
| | IRGACURE 651 | - | - | - | - | 0.05 | 0.05 |
| | IRGACURE 184 | - | - | - | - | 0.05 | 0.05 |
| Chain Transfer Agent | t-LSH | - | - | - | - | - | - |
| Metal Sulfate | LATEMULE-118B | 5 | 3 | 5 | - | 5 | 5 |
| | ADECAHOPE YES25 | - | - | - | 5 | - | - |
| EMALAD-25R | | - | - | - | - | - | - |
| CATIOGENES-O | | - | - | - | - | - | - |
| EMULGEN1135S-70 | | - | - | - | - | - | - |
| HITENOLLA-12 | | - | - | - | - | - | - |
| PELEXSS-H | | - | - | - | - | - | - |
| PELEXCS | | - | - | - | - | - | - |
| ELECTROSTRIPPERF | | - | - | - | - | - | - |
| Cross-Linking Agent | DNW 5010 | - | - | - | - | - | - |
| | T/C | - | - | - | - | - | - |
| Polymerization Method | | Solution Polymerization | Solution Polymerization | Solution Polymerization | Solution Polymerization | Photopolymerization | Photopolymerization |
| Evaluation | Gel Fraction (1) (%) after Shape Retention | 0 | 0.1 | 2.7 | 0.2 | 18.5 | 25.4 |
| | Gel Fraction (2) (%) after Aging | 70.3 | 65.0 | 78.3 | 53.5 | 58.5 | 72.5 |
| | Pressure-Sensitive Adhesive Force (180°, 300 mm/min) | 1.1 | 1.2 | 1.2 | 1.1 | 1.7 | 5.1 |
| | Adhesive Residue Properties | Good | Good | Good | Good | Good | Good |
| | Pot Life | Good | Good | Good | Good | Good | Good |
| | 500 % Modulus (N/mm², after Aging) | 0.142 | 0.085 | 0.117 | 0.063 | 0.080 | 0.116 |

[Table 2]

**Table 2**

| Type | | Comparative Examples | | | | | |
|---|---|---|---|---|---|---|---|
| | | 1 | 2 | 3 | 4 | 5 | 6 |
| Monomer Component | BA | 95 | 95 | 95 | - | 95 | 95 |
| | 2EHA | - | - | - | 70 | - | - |
| | NVC | - | - | - | 20 | - | - |
| | IBXA | - | - | - | 10 | - | - |
| | AA | 5 | 5 | 5 | - | 5 | 5 |
| | HEA | - | - | - | - | - | - |
| Polymerization Initiator | AIBN | 0.2 | 0.2 | 0.2 | 0.2 | 0.2 | 0.2 |
| | VA-057 | - | - | - | - | - | - |
| | IRGACURE651 | - | - | - | - | - | - |
| | IRGACURE184 | - | - | - | - | - | - |
| Chain Transfer Agent | t-LSH | - | - | - | - | - | - |
| Metal Sulfate | LATEMULE-118B | - | - | - | 5 | - | - |
| | ADECAHOPEYES25 | - | - | - | - | - | - |
| EMALAD-25R | | 5 | - | - | - | - | - |
| CATIOGENES-O | | - | 5 | - | - | - | - |
| EMULGEN1135S-70 | | - | - | 5 | - | - | - |
| HITENOLLA-12 | | - | - | - | - | 5 | - |
| PELEXSS-H | | - | - | - | - | - | 5 |
| PELEXCS | | - | - | - | - | - | - |
| ELECTROSTRIPPERF | | - | - | - | - | - | - |
| Cross-Linking Agent | DNW 5010 | - | - | - | - | - | - |
| | T/C | - | - | - | - | - | - |
| Polymerization Method | | Solution Polymerization | Solution Polymerization | Solution Polymerization | Solution Polymerization | Solution Polymerization | Solution Polymerization |
| Evaluation | GelFraction(1)(%) after Shape Retention | 0.6 | 2.0 | 0 | 3.5 | 3.7 | 7.3 |
| | GelFraction(2)(%)after Aging | 1.2 | 3.7 | 0 | 2.4 | 3.2 | 8.9 |
| | Pressure-Sensitive Adhesive Force (180°, 300 mm/min) | 0.5 | 0.9 | 2.6 | 0.4 | 0.1 | 1.3 |
| | Adhesive Residue Properties | Good | Good | Good | Bad | Good | Good |
| | Pot Life | Good | Good | Good | Good | Good | Good |
| | 500 % Modulus (N/mm², after Aging) | 0.045 | 0.022 | 0.025 | 0.059 | 0.013 | 0.024 |

[Table 3]

**Table 3**

| Type | | Comparatives Examples | | | | |
|---|---|---|---|---|---|---|
| | | 7 | 8 | 9 | 10 | 11 |
| Monomer Component | BA | 95 | 95 | 95 | 95 | 100 |
| | 2EHA | - | - | - | - | - |
| | NVC | - | - | - | - | - |
| | IBXA | - | - | - | - | - |
| | AA | 5 | 5 | 5 | 5 | 4 |
| | HEA | - | - | - | - | - |
| Polymerization Initiator | AIBN | 0.2 | 0.2 | 0.2 | 0.2 | - |
| | VA-057 | - | - | - | - | 0.1 |
| | IRGACURE 651 | - | - | - | - | - |
| | IRGACURE 184 | - | - | - | - | - |
| Chain Transfer Agent | t-LSH | - | - | - | - | 0.05 |
| Metal Sulfate | LATEMULE-118B | - | - | - | - | 2/5 |
| | ADECAHOPEYES25 | - | - | - | - | - |
| EMALAD-25R | | - | - | - | - | - |
| CATIOGENES-O | | - | - | - | - | - |
| EMULGEN1135S-70 | | - | - | - | - | - |
| HITENOLLA-12 | | - | - | - | - | - |
| PELEXSS-H | | - | - | - | - | - |
| PELEXCS | | 5 | - | - | - | - |
| ELECTROSTRIPPERF | | - | 5 | - | - | - |
| Cross-Linking Agent | DNW 5010 | - | - | 5 | - | - |
| | T/C | - | - | - | 5 | - |
| Polymerization Method | | Solution Polymerization | Solution Polymerization | Solution Polymerization | Solution Polymerization | Emulsion Polymerization |
| Evaluation | Gel Fraction(1)(%) after Shape Retention | 2.8 | 2.2 | 90.3 | 98.4 | 0.4 |
| | Gel Fraction (2)(%) after Aging | 1.8 | 4.1 | 97.0 | 100.0 | 2.4 |
| | Pressure-Sensitive Adhesive Force (180°, 300 mm/min) | 3 | 0.5 | 0.2 | 0 | 2.1 |
| | Adhesive Residue Properties | Good | Good | Good | Good | Good |
| | Pot Life | Good | Good | Bad | Bad | Good |
| | 500 % Modulus (N/mm², after Aging) | 0.007 | 0.036 | Failure at 300% | Failure at 150% | 0.034 |

In Tables 1 to 3, the number of blended parts of each of the materials is shown by the number of parts by mass based on conversion of active component. The number of parts by mass of the materials is converted to be shown so that the total amount of the monomer component is 100 parts by mass.

Abbreviations used in Tables 1 to 3 are as follows.
BA: acrylic butyl
2EHA: 2-ethylhexyl acrylate
NVC: N-vinylcaprolactam
IBXA: isobornyl acrylate
AA: acrylic acid
HEA: 2-hydroxyethyl acrylate
AIBN: 2,2'-azobisisobutyronitrile, manufactured by Wako Pure Chemical Industries, Ltd.
VA-057: 2,2'-azobis[N-(2-carboxyethyl)-2-methylpropionamidine]hydrate, manufactured by Wako Pure Chemical Industries, Ltd.
IRGACURE 651: trade name, 2,2-dimethoxy-1,2-diphenylethane-1-one, 100 mass % of an active component, manufactured by BASF Japan Ltd.
IRGACURE 184: trade name, 1-hydroxy-cyclohexyl-phenylketone, 100 mass % of an active component, manufactured by BASF Japan Ltd.
t-LSH: tert-lauryl mercaptan
LATEMULE E118-B: trade name, polyoxyethylene alkyl ether sodium sulfate, an aqueous solution of 26 mass % of an active component, manufactured by Kao Corporation
ADEKA HOPE YES25: trade name, polyoxyethylene lauryl ether sodium sulfate, a metal sulfate having a substituted group, 25.2 mass % of an active component, manufactured by ADEKA CORPORATION
EMAL AD-25R: trade name, ammonium lauryl sulfate, 24 mass % of an active component, manufactured by Kao Corporation
CATIOGEN ES-O: trade name, octyl dimethyl ethyl ammonium ethyl sulfate, 50 mass % of an active component, manufactured by DAI-ICHI KOGYO SEIYAKU CO., LTD.
EMULGEN 1135S-70: trade name, polyoxyethylene alkyl ether, nonionic-based, 70 mass % of an active component, manufactured by Kao Corporation
HITENOL LA-12: trade name, polyoxyethylene lauryl ether ammonium sulfate, 94 mass % of an active component, manufactured by DAI-ICHI KOGYO SEIYAKU CO., LTD.
PELEX SS-H: trade name, alkyl diphenyl ether disulfonate sodium, 50 mass % of an active component, manufactured by Kao Corporation
PELEX CS: trade name, dialkyl sulfosuccinate sodium, 45 mass % of an active component, manufactured by Kao Corporation
ELECTROSTRIPPER F: trade name, polyoxyethylene alkyl ether potassium phosphate, 70 mass % of an active component, manufactured by Kao Corporation
DNW 5010: trade name: "BURNOCK DNW5010", an isocyanate cross-linking agent, 78 mass % of an active component, manufactured by DIC CORPORATION
T/C: trade name: "TETRAD-C", 1,3-bis(N,N-glycidylaminomethyl)cyclohexane, an epoxy cross-linking agent, 100 mass % of an active component, an epoxy equivalent: 110, the number of functional groups: 4, manufactured by MITSUBISHI GAS CHEMICAL COMPANY

While the illustrative embodiments of the present invention are provided in the above description, such is for illustrative purpose only and it is not to be construed as limiting the scope of the present invention. Modification and variation of the present invention that will be obvious to those skilled in the art is to be covered by the following claims.

### Industrial Applicability

The pressure-sensitive adhesive sheet formed from the pressure-sensitive adhesive composition is widely used in various industrial fields.

## Claims

1. A pressure-sensitive adhesive composition prepared in a non-aqueous state from
an acrylic polymer having an active hydrogen-containing group and
a metal sulfate having a substituted group.

2. The pressure-sensitive adhesive composition according to claim 1, wherein
the following gel fraction (1) is 30 mass % or less.
Gel fraction (1): a percentage of a dry mass of an ethyl acetate-insoluble portion with respect to a mass of a pressure-sensitive adhesive layer before immersion at the time of immersing the pressure-sensitive adhesive layer, which is obtained by being applied onto a substrate to be retained in shape, is laminated on the substrate, and has a thickness of 10 µm, in an ethyl acetate at 23°C for seven days.

3. The pressure-sensitive adhesive composition according to claim 1, wherein
the following gel fraction (2) is 50 mass % or more.
Gel fraction (2): a percentage of a dry mass of an ethyl acetate-insoluble portion with respect to a mass of a pressure-sensitive adhesive layer before immersion at the time of immersing the pressure-sensitive adhesive layer, which is obtained by heating at 80°C for seven days after being applied onto a substrate to be retained in shape so as to have a thickness of 10 µm and is laminated on the substrate, in an ethyl acetate at 23°C for seven days.

4. The pressure-sensitive adhesive composition according to claim 1, wherein
the substituted group is a polyoxyethylene alkyl ether group.

5. The pressure-sensitive adhesive composition according to claim 1, wherein
the metal sulfate is a sodium salt.

6. A pressure-sensitive adhesive sheet comprising:
a pressure-sensitive adhesive layer formed from a pressure-sensitive adhesive composition, wherein
the pressure-sensitive adhesive composition is prepared in a non-aqueous state from
an acrylic polymer having an active hydrogen-containing group and
a metal sulfate having a substituted group.
